# EUROPÄISCHE PATENTSCHRIFT

(11) **EP 3 480 571 B1**
(45) Veröffentlichungstag und Bekanntmachung des Hinweises auf die Patenterteilung: **05.04.2023**
(21) Anmeldenummer: 18199355.1
(22) Anmeldetag: 09.10.2018
(51) Int. Cl.: G01J 3/10, G01J 3/02, G01V 8/20, G01J 3/12, G01S 17/02, G01V 8/10, A01D 75/20, A01M 31/00, G01J 3/427, G01S 7/48, G01S 7/481, G01S 17/04

(54) **VORRICHTUNG ZUM OPTISCHEN ERKENNEN VON OBJEKTEN**
DEVICE FOR OPTICALLY DETECTING OBJECTS
DISPOSITIF DE DÉTECTION OPTIQUE D'OBJETS

(30) Priorität: 10.10.2017 AT 508632017
(43) Veröffentlichungstag der Anmeldung: 08.05.2019
(73) Patentinhaber: PÖTTINGER Landtechnik GmbH, 4710 Grieskirchen (AT)
(72) Erfinder: Hausmann, Ulrich, Dr.-Ing., 6020 Innsbruck (AT)
(74) Vertreter: Thoma, Michael

(56) Entgegenhaltungen:
- EP-A1- 3 183 950
- DE-B4-102005 055 919
- US-A- 5 296 702
- US-A1- 2010 231 893
- US-A1- 2015 211 928
- US-A1- 2016 187 199
- US-A1- 2017 272 666
- US-A1- 2017 289 468

## Beschreibung

Die Erfindung betrifft eine Vorrichtung und ein Verfahren zum optischen Erkennen unterschiedlicher Objekte mit einer Sensoreinheit zur elektromagnetischen Detektion von Objekten entsprechend den Oberbegriffen der Ansprüche 1 und 11.

Bei der maschinellen Bearbeitung landwirtschaftlicher Flächen kommt es immer wieder zu Unfällen, bei denen insbesondere Jungtiere von Rehwild, Feldhasen aber auch Bodenbrütern verletzt oder getötet werden. Neben Erntemaschinen im Ackerbau sind hier besonders Mähwerke bei der Heumahd von Wiesenflächen betroffen. Zur Gefährdung der Tiere tragen bedauerlicherweise auch artspezifische Schutzmechanismen von Jungtieren bei. Wenn so zum Beispiel Rehkitze bei Gefahr ihre Deckung im hohen Gras nicht verlassen - ein Verhalten, das zum Schutz vor Raubwild adäquat ist -, so können sie aber gerade durch dieses Verhalten Mähwerken zum Opfer fallen.

Im Stand der Technik sind bereits Methoden bekannt, Tiere in landwirtschaftlich genutzten Flächen zu detektieren und so Unfälle zu vermeiden.

So beschreibt die US 2010/231893 A1 Systeme und Verfahren zum Erfassen des Vorhandenseins von Blut. Spezifische Anwendungen können die Jagd umfassen, bei der es erforderlich sein kann, ein verletztes blutendes Tier aufzuspüren. Gemäß einer Ausführungsform sendet eine Vorrichtung Licht mit einer oder mehreren Wellenlängen, um einen Bereich zu bestrahlen, der möglicherweise Blut enthält. Hämoglobin im Blut absorbiert oder reflektiert mehr des durchgelassenen Lichts als andere Stoffe in der Region. Ein Detektor erfasst das von der Region reflektierte Licht und ermittelt mithilfe der Spektralanalyse, ob sich Blut in der Region befindet. Es wird die Verwendung von Wellenlängen bis etwa 825 nm beansprucht.

US 2015/211928 A1 offenbart einen Apparat zur Erkennung von Objekten, bevorzugt Wasserlachen, unter Ausnutzung zweier Wellenlängen, von denen eine einen Wert kleiner oder gleich 1,3 µm hat und die andere größer oder gleich 1,4 µm.

DE 10 2005 055 919 B4 lehrt ein Verfahren zum Detektieren und Diskriminieren von Tieren in landwirtschaftlich genutzten Wiesenflächen. Dabei werden mittels eines an einem landwirtschaftlichen Fahrzeug angebrachten Sensorsystems spektrale Signaturen in Form von spektralen Reflexionsgraden bestimmt, um so Tiere oder Gelege automatisch erkennen zu können. Beansprucht wird die Verwendung von Tupeln von Wellenlängenbereichen:
1. von 350 nm bis 2500 nm
2. zwischen 1000 nm und 1750 nm und/oder zwischen 1950 nm und 2500 nm
3. um 550 nm (grün) und um 680 nm (rot)
4. um 2010 nm, 2057 nm, 2105 nm, 2180 nm, 2236 nm

Verfahren und Systeme zur gleichzeitigen Abbildung bei mehreren Wellenlängen werden in US 2017/272666 A1 bereitgestellt. In einem Aspekt umfasst eine hyperspektrale / multispektrale Bildgebungsvorrichtung eine Linse, die zum Empfangen von Licht konfiguriert ist, das von einem Objekt zurückgestreut wird, mehrere Fotosensoren, mehrere Bandpassfilter, die jeweilige Fotosensoren abdecken, wobei jedes Bandpassfilter so konfiguriert ist, dass es ein anderes jeweiliges Spektralband zulässt durch das Filter zu gelangen und eine Vielzahl von Strahlteilern in optischer Verbindung mit der Linse und den Fotosensoren, wobei jeder Strahlteiler das von der Linse empfangene Licht in eine Vielzahl von optischen Pfaden aufteilt, wobei jeder Pfad konfiguriert ist Licht zu einem entsprechenden Fotosensor durch den dem jeweiligen Fotosensor entsprechenden Bandpassfilter zu leiten.

Eine Bildaufnahmevorrichtung nach US 2017/289468 A1 beinhaltet: eine erste Lichtquelle, die im Betrieb erstes gepulstes Licht emittiert, um ein erstes Bild eines ersten Musters an einer ersten Position in einem vorbestimmten Bereich eines Objekts zu projizieren, und zweites gepulstes Licht emittiert, um ein zweites Bild eines zweiten Musters an einer zweiten Position, die sich von der ersten Position unterscheidet, in dem vorbestimmten Bereich des Objekts zu projizieren; einen Bildsensor mit mehreren Pixeln, die jeweils einen Fotodetektor beinhalten, der im Betrieb empfangenes Licht in eine Signalladung umwandelt, und einen ersten Akkumulator und einen zweiten Akkumulator, von denen jeder im Betrieb die Signalladung sammelt; und eine Steuerschaltung, die im Betrieb die erste Lichtquelle und den Bildsensor steuert.

Die Aufgabe der Erfindung ist es, eine Vorrichtung und ein Verfahren zur Tiererkennung anzugeben, bei dem eine hohe Detektionssicherheit und Zuverlässigkeit bei der Suche von Tieren in landwirtschaftlichen Flächen erzielt werden kann.

Diese Aufgabe wird gelöst durch eine Vorrichtung zur Tiererkennung für landwirtschaftliche Arbeitsgeräte mit den Merkmalen des Anspruchs 1 der vorliegenden Erfindung. Vorteilhafte Ausgestaltungen sind in den abgeleiteten Unteransprüchen zu entnehmen. Die erfindungsgemäße Vorrichtung enthält zumindest einer Sensoreinheit zur elektromagnetischen Detektion von Objekten auf einer landwirtschaftlichen Fläche, wobei die Sensoreinheit eine Strahlungsquelle zur Beleuchtung eines Messflecks und einen Detektor zur Messung einer Intensität einer Strahlung aus dem Messfleck umfasst, und wobei eine Steuervorrichtung ausgebildet ist, wobei die Strahlungsquelle und der Detektor durch die Steuervorrichtung elektrisch getaktet betreibbar ist. Dabei ist eine Auswerteeinheit ausgebildet, wobei aus von dem Detektor gemessenen Werten der Intensität ein Verhalten des Reflexionsgrades des Objekts in dem Messfleck durch die Auswerteeinheit bestimmbar ist, und wobei vor dem Detektor eine Filtereinrichtung angeordnet ist, wobei durch die Filtereinrichtung Strahlung mit zumindest zwei zueinander verschiedenen Spektralbereichen auswählbar ist, und wobei die Strahlungsquelle zumindest einen ersten Sender mit einer ersten Wellenlänge A1 mit einem Wert von etwa 940 nm oder um 1130 nm und einen zweiten Sender mit einer zweiten Wellenlängeλ2 mit einem Wert von 1350-1500 nm umfasst.

Der Messfleck auf der landwirtschaftlichen Fläche kann auch mit mehr als zwei Wellenlängen bestrahlt werden, beispielsweise mit drei, vier oder fünf verschiedenen Wellenlängen, wobei dann der Detektor vorteilhafterweise dazu ausgebildet ist, Strahlungen bzw. deren Intensitäten, die bei den jeweiligen Wellenlängen auftreten bzw. von dem Messfleck zurückgeworfen werden, zu erfassen. Der genannte Detektor kann also dazu ausgebildet sein, Intensitäten in drei, vier, fünf oder auch mehr Wellenlängenbereichen zu messen.

Von Vorteil ist insbesondere, wenn der erste Sender die erste Wellenlänge λ1 mit einem Wert um 940 nm aufweist und der zweite Sender die zweite Wellenlänge λ2 mit einem Wert um 1450 nm aufweist. Bei Verwendung dieser beiden Wellenlängen A1 und A2 ist der Unterschied des Reflexionsgrads eines Tiers zu dem Reflexionsgrad von Gras, Erde oder Steinen besonders deutlich und gleichzeitig weist der Spektralverlauf des Sonnenlichts aufgrund der Absorption in der Atmosphäre nur geringe Intensitäten auf. Ein störender und verfälschender Einfluss des Umgebungslichts ist damit von vornherein besonders gering.

Von Vorteil ist weiters, dass der Detektor eine Fotodiode, z.B. eine InGaAs Diode, umfasst. Gemäß einer vorteilhaften Ausbildung der Vorrichtung ist weiters vorgesehen, dass der erste Sender und der zweite Sender jeweils eine Leuchtdiode (LED) oder Laserdiode (LD) umfasst, da mit derartigen Strahlungsquellen hohe Wirkungsgrade erreicht werden können. Auch kann mit LEDs annähernd monochromatische Strahlung mit enger Bandbreite erzeugt werden.

Vorteilhaft ist auch die Ausbildung der Vorrichtung wonach ein Senderstrahlengang für die Strahlungsquelle ausgebildet ist, wobei der erste Sender und der zweite Sender gemeinsam in dem Senderstrahlengang angeordnet sind. Damit kann gleichzeitig eine geringe Baugröße der Sensoreinheiten als auch ein Kostenvorteil erzielt werden.

Von Vorteil ist auch, dass der Senderstrahlengang einen Parabolspiegel undloder eine Linse umfasst.

Gemäß einer bevorzugten Ausführungsvariante ist vorgesehen, dass die Filtereinrichtung einen Doppelbandpassfilter umfasst, wobei der Doppelbandpassfilter für die erste Wellenlänge λ1 und für die zweite Wellenlänge λ 2 durchlässig ist. Auf diese Weise wird erreicht, dass bei der Messung durch den Detektor nur Strahlung der gewünschten Wellenlängen λ1, A2 zum Wert der gemessenen Strahlungsintensität beitragen.

Vorteilhaft ist auch die Ausbildung der Vorrichtung wonach ein Empfängerstrahlengang für den Detektor ausgebildet ist, der einen Parabolspiegel undloder eine Linse umfasst.

Gemäß einer bevorzugten Ausführungsform umfasst die Vorrichtung einen Sensorbalken, an dem mehrere Sensoreinheiten über eine Längserstreckung des Sensorbalkens verteilt angeordnet sind. Dies hat den Vorteil, dass dadurch die Anordnung von Sensoreinheiten über eine gesamte Bearbeitungsbreite eines Arbeitsgeräts möglich ist und somit auch über die gesamte Bearbeitungsbreite des Arbeitsgeräts Messungen durchgeführt werden können.

Vorzugsweise ist auch vorgesehen, dass optische Achsen der Empfängerstrahlengänge und optische Achsen der Senderstrahlengänge relativ zueinander zumindest annähernd parallel ausgerichtet sind. Weiters kann es auch vorteilhaft sein, wenn die Senderstrahlengänge und die Empfängerstrahlengänge auf Unendlich kollimiert sind, da so ein Einfluss der Entfernung zum Messobjekt weitgehend minimiert wird (selbes Messverhalten für Objekt mit z.B. 0,5 m und 1 m Abstand zum Sensor). Insbesondere ist es aber auch möglich, dass die Senderstrahlengänge und die Empfängerstrahlengänge für einen Bodenabstand mit einer Höhe von ca. 1 m auf einem Messfleck fokussiert sind. Dies hat den Vorteil, dass bei einer derartigen Dimensionierung die Vorrichtung für einen weiten Anwendungsbereich in verschiedenen Feldfruchtkulturen als auch bei der Heumahd verwendbar ist.

Die Aufgabe der Erfindung wird gemäß Anspruch 11 eigenständig auch durch ein Verfahren zur Tiererkennung bei der Bearbeitung einer landwirtschaftlichen Fläche mit einem Arbeitsgerät mit einer Vorrichtung mit einer Sensoreinheit zur elektromagnetischen Detektion von Objekten, wobei die Sensoreinheit eine Strahlungsquelle zur Beleuchtung eines Messflecks und einen Detektor zur Messung einer Intensität einer Strahlung aus dem Messfleck umfasst, gelöst. Das Verfahren umfasst dabei die folgenden Schritte:
a) der Messfleck wird mit einem ersten Sender der Strahlungsquelle mit Strahlung einer ersten Wellenlänge A1 mit einem Wert von etwa 940 nm oder um 1130 nm bestrahlt und dabei mit dem Detektor eine erste Intensität J1 einer von dem Messfleck reflektierten Strahlung gemessen;
b) der Messfleck wird mit einem zweiten Sender der Strahlenquelle mit Strahlung einer zweiten Wellenlängeλ2 mit einem Wert von 1350-1500 nm bestrahlt und dabei mit dem Detektor eine zweite Intensität J2 einer von dem Messfleck reflektierten Strahlung gemessen;
c) während die Strahlungsquelle ausgeschaltet ist, wird mit dem Detektor eine Intensität J0 einer von dem Messfleck reflektierten und störenden Umgebungsstrahlung gemessen;
d) Bereinigung der ersten und zweiten detektierten Intensität J1 und J2 vom störenden Einfluss des Umgebungslichtes durch Subtraktion J1 - J0 und J2 - J0 zur Generierung unverfälschter Intensitäten J1n und J2n;
e) Vergleichen der unverfälschten Messsignale J1n und J2n mit einem Toleranzfeld und Feststellen des Vorhandenseins eines Objektes, wenn die Werte J1n, J2n in einem bestimmten Bereich eines Toleranzfeldes liegen.

In Weiterbildung der Erfindung ist es auch möglich, den genannten Messfleck mit einem dritten Sender mit Strahlung einer dritten Wellenlängen A3 zu bestrahlen und dabei mit dem Detektor eine dritten Intensität J3 einer von dem Messfleck reflektierten Strahlung zu messen, und dann analog zur Bereinigung der störenden Umgebungsstrahlung eine dritte unverfälschte Intensität durch Subtraktion der dritten Intensität mit der Umgebungsintensität J0 zu bestimmen, und schließlich das Vorhandensein eines Objekts festzustellen, wenn die dann drei Werte J1n, J2n und J3n in einem bestimmten Toleranzfeld liegen. Analog kann der Messfleck auch noch mit weiteren Wellenlängen A4, λ5 ... An bestrahlt und entsprechende vierte, fünfte ... n-te Intensitäten gemessen werden, aus denen dann wiederum vierte, fünfte ... n-te bereinigte, unverfälschte Intensitäten bestimmt werden können, um das Vorhandensein eines Objekts zu bestimmen, wenn diese unverfälschten Intensitäten in einem bestimmten Toleranzfeld liegen.

Von Vorteil ist, wenn bei dem Verfahren die Abfolge der Messungen bzw. Auswertungen gemäß den Schritten a) bis e) periodisch fortlaufend, mit einer Frequenz von zumindest 10 Hz, vorzugsweise zumindest 100 Hz, durchgeführt wird. Dies erlaubt sehr kurze Reaktionszeiten zur Vermeidung von Zusammenstößen bzw. von Unfällen mit Tieren. Außerdem kann durch die periodische Messabfolge der Einfluss von schwankendem Umgebungslicht rasch und dynamisch kompensiert werden.

Gemäß einer vorteilhaften Weiterbildung des Verfahrens ist vorgesehen, dass in einem die Schritte a), b) und c) umfassenden Messdurchlauf zusätzlich eine Kontrollmessung durchgeführt wird, wobei der Messfleck gleichzeitig mit dem ersten Sender und mit dem zweiten Sender bestrahlt wird. Durch die zusätzliche Kontrollmessung kann bei der Auswertung der Messdaten zusätzlich eine Plausibilitätsprüfung der Messdaten als auch der Auswerteergebnisse durchgeführt werden. Auf diese Weise lassen sich Fehlalarme vermeiden.

Von Vorteil ist, wenn bei dem Verfahren bei Signalisierung des Vorhandenseins eines Tieres in dem Messfleck durch eine Steuervorrichtung ein Warnsignal oder Notprogramm gestartet wird. Das Notprogramm erlaubt in vorteilhafter Weise automatisch erfolgende Eingriffe in die Steuerung des Betriebs des Arbeitsgeräts.

Von Vorteil ist auch die Weiterbildung des Verfahrens wonach in dem Notprogramm ein Anheben des Arbeitsgeräts während des Passierens eines Bereichs, in dem sich ein Tier befindet, vorgesehen ist. Damit können unnötige oder mögliche gefährliche Bremsmanöver vermieden werden.

Gemäß einer besonders vorteilhaften Weiterbildung des Verfahrens ist vorgesehen, dass zum Vergleichen mit dem Toleranzfeld Mittelwerte von mehreren Wertepaaren J1n, J2n verwendet werden, wobei diese aus zeitlich aufeinanderfolgenden Messdurchgängen berechnet werden.

Vorteilhaft ist auch die Weiterbildung des Verfahrens, bei dem zum Vergleich mit dem Toleranzfeld Mittelwerte von Wertepaaren J1n, J2n, die einer zusammenhängenden Teilfläche einer mit dem Arbeitsgerät zu bearbeitenden Bearbeitungsbahn angehören, verwendet werden. Solche über Teilflächen sich erstreckende Mittelwertbildungen werden vorzugsweise für mehrere die gesamte Bearbeitungsbreite abdeckende Teilflächen durchgeführt. Die Teilflächen können dabei einander überlappend oder auch einander nicht überlappend gewählt werden. Auf diese Weise können Fehlalarme bzw. Fehlauslösungen des Notprogramms in der Steuerung der Arbeitsmaschine vermieden werden.

Zur Verbesserung der Effizienz und Zuverlässigkeit ist es vorteilhaft, mehrere Sensoreinheiten in einer linearen Anordnung, direkt neben einander zu montieren (Sensorbalken). Dies ist unter anderem günstig bei der Bearbeitung von Flächen wie z.B. einer Wiese. Die Sensoreinheiten sind dazu an dem Sensorbalken mit in etwa gleichem Abstand relativ zueinander über die Längserstreckung des Sensorbalkens (entsprechend der Breite einer Bearbeitungsbahn) befestigt.

Zum besseren Verständnis der Erfindung wird diese anhand der nachfolgenden Figuren näher erläutert.

Es zeigen jeweils in stark vereinfachter, schematischer Darstellung:
- Fig. 1: eine Sensoreinheit der Vorrichtung zur Tiererkennung geschnitten dargestellt;
- Fig. 2: ein Blockschaltbild der Vorrichtung zur Tiererkennung mit einer Sensoreinheit und einer Steuervorrichtung;
- Fig. 3: eine Draufsicht von unten auf eine Sensoreinheit mit einem Empfängerstrahlengang und einem gemeinsamen Senderstrahlengang;
- Fig. 4: eine Sensoreinheit gemäß einer alternativen Ausführungsvariante in Draufsicht von unten;
- Fig. 5: ein alternatives Ausführungsbeispiel der Sensoreinheit in Draufsicht von unten;
- Fig. 6: eine alternative Ausführungsform der Vorrichtung zum Erkennen unterschiedlicher Objekte mit der Sensoreinheit, geschnitten dargestellt;
- Fig. 7: eine alternative Ausführungsform der Vorrichtung zum Erkennen unterschiedlicher Objekte, dargestellt durch ein Blockschaltbild mit der Steuervorrichtung;
- Fig. 8: eine Darstellung des spektralen Verlaufs des Reflexionsgrads unterschiedlicher Objekte gemeinsam mit dem Spektrum des Sonnenlichts.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die in den Figuren gezeigte Ausrichtung der Vorrichtung bezogen und sind diese Lageangaben bei einer Lageänderung sinngemäß auf die neue Lage zu übertragen.

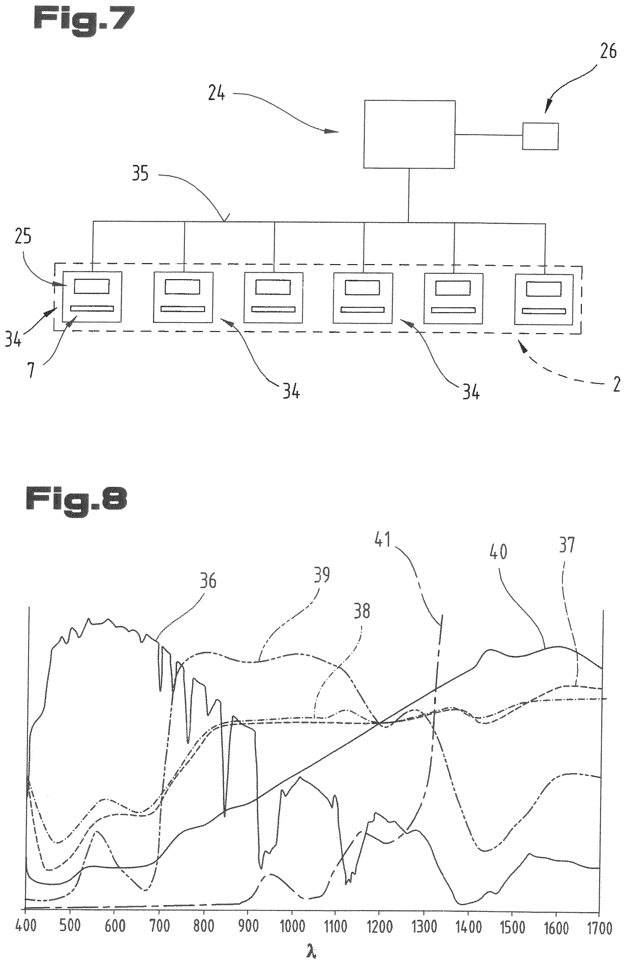

Der Aufbau und die Verfahrensweise der Erfindung werden im Folgenden am Beispiel eines Arbeitsgeräts mit einem Sensorbalken 2 zur Tierkennung beschrieben (Fig.7). Das Arbeitsgerät sei dazu an einem Traktor befestigt. Bei dem Arbeitsgerät soll es sich gemäß diesem Ausführungsbeispiel um ein Mähwerk handeln und wird dieses entsprechend der Fahrtrichtung von dem Traktor über eine Bearbeitungsbahn eines Felds- bzw. einer Wiesenfläche hinwegbewegt. Der Sensorbalken 2 zur Tierkennung ist dem Mähwerk bezüglich der Fahrtrichtung vorgeordnet und erstreckt sich ebenso über eine Breite der Bearbeitungsbahn.

An dem Sensorbalken 2 ist eine Mehrzahl von Sensoreinheiten 7 zur elektromagnetischen Detektion von Objekten bzw. von Tieren angeordnet. Die Sensoreinheiten 7 sind dazu an dem Sensorbalken 2 mit in etwa gleichem Abstand relativ zueinander über die Längserstreckung des Sensorbalkens 2 (entsprechend der Breite der Bearbeitungsbahn) befestigt. Optische Achsen 9 der Sensoreinheiten 7 sind im Wesentlichen senkrecht zu der Längserstreckung des Sensorbalkens 2 und parallel, relativ zueinander, ausgerichtet. Durch eine jede der Sensoreinheiten 7 kann ein Messfleck auf dem Boden der Bearbeitungsbahn erfasst werden. Die optischen Achsen 9 der Sensoreinheiten 7 sind dabei aufrecht, insbesondere in etwa senkrecht auf den Bearbeitungsbereich bzw. auf den Boden gerichtet.

Rehkitze aber auch andere Jungtiere verharren instinktiv in Deckung, um nicht vom Raubwild bemerkt zu werden. Umso höher ist andererseits die Gefahr für das Tier, von einem Mähwerk erfasst oder sogar getötet zu werden. Wird nun aber das Tier von einer oder auch gleichzeitig von mehreren der Sensoreinheiten 7 detektiert, so kann entweder ein Warnsignal an den Fahrer des Traktors gesendet werden oder aber auch automatisiert in die Steuerung des Betriebes des Arbeitsgeräts derart eingegriffen werden, dass das Mähwerk nicht mit dem Tier in Berührung kommt. Das Mähwerk kann dazu beispielsweise über den Bereich, in dem sich das Tier befindet, hydraulisch angehoben und/oder der Traktor abgetrennt werden.

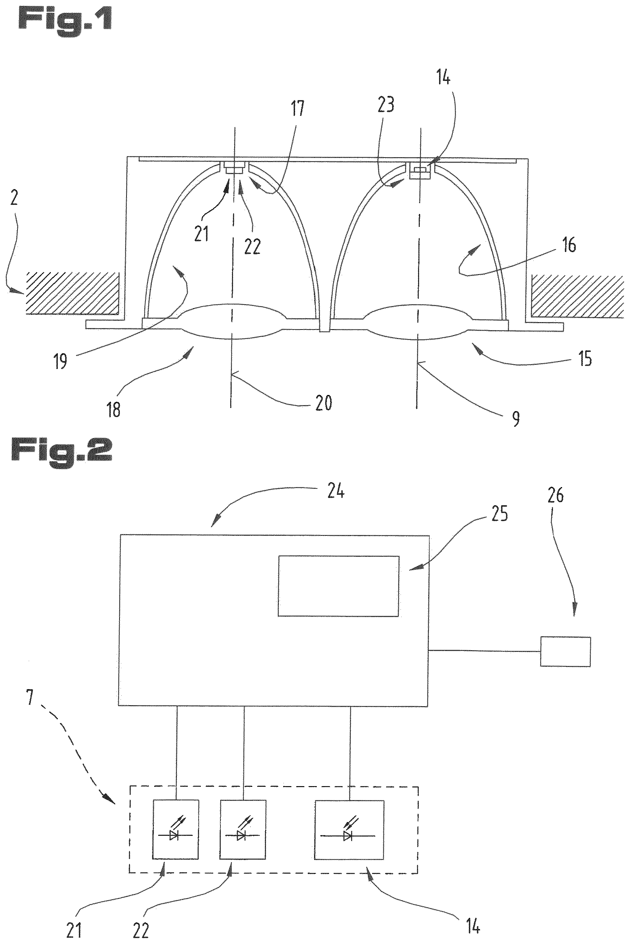

Die Fig. 1 zeigt exemplarisch die Sensoreinheit 7 der Vorrichtung zur Tiererkennung geschnitten dargestellt.

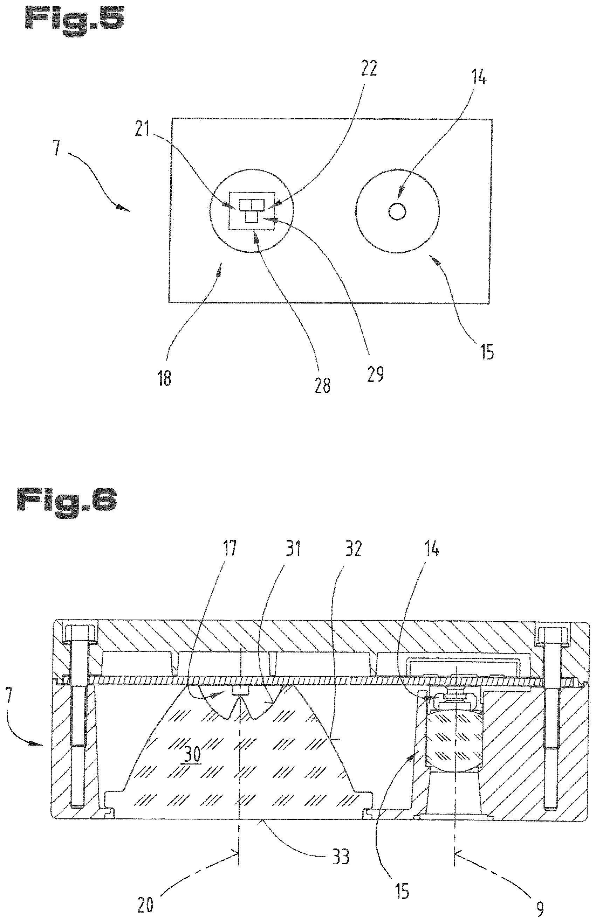

Zur Detektion von Strahlung aus dem Messfleck weist die Sensoreinheit 7 einen Detektor 14 auf. Der Detektor 14 kann im Fokus einer Empfängeroptik bestehend aus einer Linse 15 und einem Parabolspiegel 16 angeordnet sein. Die von der Empfängeroptik aufgefangene Strahlung aus dem Messfleck kann durch den Detektor 14 gemessen werden. Bei dem Detektor 14 handelt es sich bevorzugt um eine Fotodiode, mit der die Intensität der eintreffenden Strahlung gemessen werden kann. Neben dem Detektor 14 mit der Empfängeroptik weist die Sensoreinheit 7 auch eine Strahlungsquelle 17 zur aktiven Beleuchtung des Messflecks auf. Die Strahlungsquelle 17 kann in der Art eines Scheinwerfers angeordnet sein. Dazu ist eine Linse 18 und ein Parabolspiegel 19 vorgesehen, die gemeinsam eine Sendeoptik bilden, mit deren Hilfe die Strahlung der Strahlungsquelle 17 auf den Messfleck hin fokussiert werden kann. Eine optische Achse 20 der Sendeoptik und die optische Achse 9 der Empfängeroptik sind dabei vorzugsweise auf den Messfleck hin konvergent verlaufend ausgerichtet. In einer alternativen Ausführungsvariante ist anstelle der Linse 18 und des Parabolspiegels 19 eine sogenannte TIR-Linse in der Sendeoptik vorgesehen, wie nachfolgend anhand der Fig. 6 beschrieben wird.

Im Übrigen sind die Strahlungsquelle 17 der Sendeoptik und der Detektor 14 in der Empfängeroptik derart eingestellt, dass deren Strahlengänge für eine Anordnung der Sensoreinheiten in einer Höhe über den Erdboden der Bearbeitungsbahn optimal überlappen. Für den praktischen Einsatz haben sich Werte der Höhe von ca. 1 m, ein relativer Abstand der Sensoreinheiten 7 voneinander von ca. 15 mm und ein Durchmesser des Messflecks von etwa 5 cm als günstig erwiesen.

Die Vorrichtung zur Tiererkennung macht sich die unterschiedlichen Verläufe der spektralen Reflexionsgrade von Gras, Erde oder Steinen einerseits und einem Tier, wie einem Rehkitz, andererseits zu nutze. Erläuterungen dazu sind nachstehend unter Bezug auf die Darstellung in Fig. 8 angegeben. Besonders die Verläufe der spektralen Reflexionsgrade im nahen Infrarot, das heißt in einem Bereich der Wellenlänge der Strahlung von etwa 900 nm bis 1500 nm, sind derart unterschiedlich, dass sie für das automatisiert durchführbare Erkennen eines Tieres durch eine Sensoreinheit 7 herangezogen werden können. So zeigt ein Rehkitz in dem genannten Spektralbereich einen nahezu gleichförmigen Anstieg des Reflexionsgrads, während Erde oder Steine einen etwa gleichbleibenden Verlauf zeigen. Der Reflexionsgrad von Gras ist in dem gleichen Spektralbereich insgesamt abfallend.

Durch Messung der Intensitäten der aus dem Messbereich reflektierten Strahlung mit der Sensoreinheit 7 zu zwei voneinander verschiedenen Wellenlängen des genannten Spektralbereichs ist es daher besonders gut möglich, ein Tier von Gras, Steinen oder Erde zu unterscheiden. Als Kriterium eignet sich beispielsweise ein Vergleich von bei zwei unterschiedlichen Wellenlängen von der Sensoreinheit 7 gemessenen reflektierten Strahlungsintensitäten mit den bekannten Reflexivitäten vermuteter Objekte bei denselben Wellenlängen.

Vorteilhafterweise umfasst die Strahlungsquelle 17 der Sensoreinheit 7 gemäß diesem Ausführungsbeispiel einen ersten Sender 21 zur Emission von Strahlung mit einer ersten Wellenlänge λ1 und einen zweiten Sender 22 zur Emission von Strahlung mit einer zweiten Wellenlänge λ2. Diese beiden Sender 21, 22 der Strahlungsquelle 17 sind räumlich eng nebeneinander angeordnet, sodass unter Verwendung desselben Strahlenganges der Sendeoptik der annähernd gleiche Messfleck abwechselnd mit Strahlung bzw. Licht der Wellenlängen λ1 und A2 beleuchtet werden kann. Während zeitlich aufeinander folgender, abwechselnder Beleuchtung des Messflecks mit der ersten Wellenlänge λ1 und mit der zweiten Wellenlänge λ2 wird jeweils die reflektierte Strahlungsintensität mit dem Detektor 14 gemessen und können so das Reflexionsverhalten von im Messfleck befindlichen Objekten jeweils für die erste Wellenlänge λ1 und für die zweite Wellenlänge λ2 bestimmt werden.

Als Sender 21, 22 werden vorzugsweise Strahlungsquellen, die möglichst monochromatisches Licht bzw. möglichst monochromatische Strahlung emittieren, verwendet. Die Sender 21, 22 werden vorzugsweise durch Leuchtdioden (LED) gebildet. Gemäß dem beschriebenen Ausführungsbeispiel wird als erster Sender 21 eine LED, die zu einer ersten Wellenlänge λ1 mit einem Wert von 940 nm geeignet ist, verwendet.

Der zweite Sender 22 wird gebildet durch eine LED, die zur Emission einer Strahlung mit einer zweiten Wellenlänge λ2 mit einem Wert von 1450 nm geeignet ist. Es ist aber auch möglich, Laserdioden (LD) oder sonstige schmalbandige Emitter mit passenden Wellenlängen zu verwenden.

Um mit dem Detektor 14 das Reflexionsverhalten zu den Wellenlängen λ1, λ2 möglichst unverfälscht bestimmen zu können, darf von dem Detektor 14 auch nur Strahlung der entsprechenden Wellenlänge λ1, λ2 erfasst werden. Als störend erweist sich das natürliche Strahlungsfeld der Umgebung, wie es vor allem durch das Strahlungsspektrum der Sonne hervorgerufen wird. Mit Hilfe einer Filtereinrichtung 23, die an bzw. vor dem Detektor 14 angeordnet ist, kann der Zutritt von störender Umgebungsstrahlung weitestgehend unterbunden werden. Die Filtereinrichtung 23 wird vorzugsweise durch einen Doppelbandpassfilter, der nur in einem vorzugsweise engen Wellenlängenbereich um die erste Wellenlänge λ1 und die zweite Wellenlänge λ2 strahlungsdurchlässig ist, gebildet.

Des Weiteren hat es sich als vorteilhaft herausgestellt, wenn die Wellenlängenbereiche so gewählt werden, dass sie in Bereiche des natürlichen Umgebungslichtes fallen, welche an sich schon wenig Strahlung aufweisen. Diese Bereiche ergeben sich durch Absorption, hauptsächlich durch Wasserdampf, des Sonnenlichtes in der Atmosphäre und liegen in etwa um 940 nm, 1130 nm, 1400 nm oder 1900 nm. Zur weiteren Reduktion des störenden Einflusses des natürlichen Strahlungsfeldes der Umgebung kann nach den Messungen unter zusätzlicher Beleuchtung des Messflecks mit Strahlung des ersten Senders 21 und des zweiten Senders 22 in einer dritten Messung die vom Messfleck empfangene Strahlung ohne eine zusätzliche, künstliche Beleuchtung detektiert werden. Die ohne zusätzliche Beleuchtung gemessenen Werte der Strahlungsintensitäten werden sodann von denjenigen mit zusätzlicher Beleuchtung abgezogen. Diese entsprechend korrigierten Werte der Strahlungsintensitäten stehen schließlich für die Bestimmung des Reflexionsverhaltens bei der ersten Wellenlänge λ1 und der zweiten Wellenlänge λ2 zur Verfügung.

Eine weitere Reduktion der Einflüsse variabler Umgebungsbedingungen kann auch durch eine entsprechend hohe Wiederholungsrate der periodisch aufeinanderfolgenden Messungen erreicht werden.

Die Fig. 2 zeigt ein Blockschaltbild der Vorrichtung zur Tiererkennung mit der Sensoreinheit 7 und einer damit verbundenen Steuervorrichtung 24. Aus Gründen der besseren Übersichtlichkeit ist in der Fig. 2 von der Mehrzahl der Sensoreinheiten 7 des Sensorbalkens 2 (Fig. 7) nur eine Sensoreinheit 7 dargestellt. Mit Hilfe der Steuervorrichtung 24 wird die zeitliche Abfolge der Ansteuerung der Sender 21, 22 der Sensoreinheit 7 und die Erfassung der Messwerte durch den Detektor 14 programmgesteuert vorgenommen. Zur Weiterverarbeitung der Messsignale des Detektors 14 umfasst die Steuervorrichtung 24 eine Auswerteeinheit 25. Im Falle, dass von der Auswerteeinheit 25 nach Analyse der von dem Detektor 14 empfangenen Messwerte das Vorhandensein eines Tiers im Bereich einer Arbeitsbahn festgestellt wird, startet die Steuervorrichtung 24 ein Notprogramm 26. Das Notprogramm 26 besteht vorzugsweise in einem automatisiert erfolgenden Eingriff in die Steuerung des landwirtschaftlichen Arbeitsgeräts und/oder eines damit verbundenen Traktors, wobei durch diesen beispielsweise das Mähwerk hydraulisch angehoben wird und erst nach Passieren des Bereichs, in dem sich das Tier befindet, wieder abgesenkt wird. Eine solche automatisiert erfolgende Notmaßnahme hat den Vorteil besonders kurzer Reaktionszeiten. In einer vereinfachten Variante könnte das Notprogramm 26 auch nur darin bestehen, den Fahrer des Traktors durch ein Warnsignal zu alarmieren.

Die Detektion der von dem Messfleck emittierten und von dem Detektor 14 aufgefangenen Strahlung erfolgt vorzugsweise mit einer hohen Taktrate, wobei die Dauer einer Messung jeweils ca. 0,5 ms betragen kann. Die Abfolge der Messdurchgänge mit jeweils einer Messung unter Beleuchtung mit der ersten Wellenlänge λ1, unter Beleuchtung mit der zweiten Wellenlänge λ2 und einer Dunkelmessung (ohne zusätzlich Beleuchtung) erfolgt vorteilhafterweise periodisch fortlaufend mit einer Frequenz von zumindest 500 Hz. Damit wird erreicht, dass das Notprogramm 26 bereits nach maximal 20 ms ausgelöst werden kann.

Der zeitliche Ablauf bei der Steuerung des Verfahrens mit Hilfe der Steuervorrichtung 24 kann somit die folgenden Schritte aufweisen: Während der Bearbeitung eines landwirtschaftlichen Feldes mit einem Arbeitsgerät wird durch die Sensoreinheiten 7 der jeweilige Messfleck mit dem ersten Sender 21 der Strahlungsquelle 17 mit Strahlung der ersten Wellenlänge λ1 bestrahlt und dabei mit dem Detektor 14 die erste Intensität J1 der von dem Messfleck reflektierten Strahlung gemessen. Daran anschließend wird der Messfleck mit dem zweiten Sender 22 mit Strahlung der zweiten Wellenlänge λ2 bestrahlt und dabei mit dem Detektor 14 die zweite Intensität J2 der von dem Messfleck reflektierten Strahlung gemessen. Während einer dritten Messung sind die beiden Sender 21, 22 ausgeschaltet (Dunkelmessung) und wird dabei mit dem Detektor 14 eine Intensität J0 der von dem Messfleck reflektierten Umgebungsstrahlung gemessen. In der Auswerteeinheit 25 der Steuervorrichtung 24 werden auf Basis der Werte der gemessenen Intensitäten J1, J2 und J0 jeweils Werte der unverfälschten reflektierten Strahlungsintensität des Messflecks spezifisch für die beiden Wellenlängen λ1 und λ2 berechnet. Durch Abzug der Intensität J0 von den jeweiligen Intensitäten J1 und J2 werden zunächst Nettointensitäten J1n = J1 - J0, J2n = J2 - J0 berechnet. Die so korrigierten Werte der Intensitäten, das heißt die Netto-Intensitäten J1n und J2n, stehen sodann für einen Vergleich mit den bekannten Reflexionscharakteristiken unterschiedlicher Materialien zur Verfügung. In der Auswerteeinheit 25 erfolgt schließlich eine programmgesteuerte Analyse der Intensitäts-Wertepaare J1n, J2n zur Identifikation eines möglicherweise in dem Messfleck vorhandenen Tiers bzw. eines Objekts. Die Abfolge dieser Schritte erfolgt in jeder der Sensoreinheiten 7 periodisch wiederkehrend während des Betriebs des Arbeitsgeräts bei der Fahrt über einer Bearbeitungsbahn.

Wird durch die Steuerung der Auswerteeinheit 25 - durch eine entsprechende Programmierung - ein mögliches Vorhandensein eines bestimmten Objektes in dem Messfleck signalisiert, so wird in weiterer Folge eine Änderung des Betriebszustands des Arbeitsgeräts eingeleitet.

Die von dem Detektor 14 der Sensoreinheit 7 erhaltenen Werte der beiden Intensitäten J1, J2 sind tatsächlich nur ein indirektes Maß für die Reflexivitäten P(λ1), P(λ2). Es sind dies lediglich die Ausgangssignale des Detektors 14 aufgrund der Erregung durch die von einem Objekt reflektierte und vom Detektor 14 empfangene Strahlungsintensität. Basierend auf dem nach einem Messdurchgang erhaltenen Wertepaar J1n, J2n nimmt die Auswerteeinheit 25 sodann einen Vergleich mit der Reflexivitäts-Charakteristik - in diesem Fall eines Tiers - vor.

Die Auswertung mit Hilfe der Auswerteeinheit 25 während der Bewegung bei der Fahrt über der Bearbeitungsbahn ermöglicht bei fortlaufender Aufzeichnung der berechneten Wertepaare J1n, J2n bzw. von daraus berechneten Reflexivitäts-Verhältnissen auch eine räumliche Zuordnung zu einzelnen Stellen (entsprechend den Ortskoordinaten x, y) auf der Bearbeitungsbahn und somit die Erzeugung eines entsprechend grobkörnigen Bildes der Bearbeitungsbahn. Die Zuordnung zu Ortskoordinaten kann entsprechend der räumlichen Anordnung der einzelnen Sensoreinheiten 7 an dem Sensorbalken und auf Grundlage der Geschwindigkeit der Bewegung bei der Fahrt des Arbeitsgeräts über der Bearbeitungsbahn erfolgen. Auf diese Weise erhält man ein Wertefeld der Wertepaare J1n(x, y), J2n(x, y). In einer bevorzugten Weiterbildung des Verfahrens werden aus den aufgezeichneten Wertepaaren J1n(x, y), J2n(x, y) Mittelwerte über Teilflächen der Bearbeitungsbahn berechnet. Der Durchmesser dieser Teilflächen, über die eine solche Mittelwertbildung erfolgt, orientiert sich dabei an der zu erwartenden Größe des Tiers oder Objekts oder der gesuchten Bodeneigenschaft. Durch die zusätzliche Maßnahme, die aufgezeichneten Wertepaaren J1n(x, y), J2n(x, y) einer Mittelwertbildung zu unterziehen, können im Übrigen fehlerhaft erfolgende Starts des Notprogramms 26 vermieden werden.

Gemäß einer weiteren bevorzugten Ausführungsvariante des Verfahrens ist in den einzelnen, periodisch wiederholten Messdurchgängen zusätzlich zu den Messungen mit Beleuchtung unter der ersten Wellenlänge λ1, einer Messung unter Beleuchtung mit der zweiten Wellenlänge A2 und einer Dunkelmessung eine weitere Messung unter gleichzeitiger Beleuchtung des Messflecks mit Strahlung sowohl der ersten Wellenlänge A1 als auch mit Strahlung der zweiten Wellenlänge A2 vorgesehen. Bei dieser vierten Messung, die als Kontrollmessung durchgeführt wird, sind sowohl der erste Sensor 21 als auch der zweite Sensor 22 eingeschaltet. Die bei dieser Kontrollmessung von dem Detektor 14 gemessene Intensität JK kann in der Auswerteeinheit 25 als Vergleichswert, beispielsweise für eine Plausibilitätsprüfung der Werte der gemessenen Intensitäten J1, J2 bei der Weiterverarbeitung der Messwerte und der Auswerte-Ergebnisse herangezogen werden.

In den vorstehenden Ausführungen wurde hauptsächlich auf das automatische Erkennen von Tieren zur Vermeidung von Unfällen und Verletzungen Bezug genommen. Das Verfahren ist aber insofern ganz allgemein zum Erkennen von Objekten geeignet, wenn typische Unterschiede in den spektralen Verläufen der Reflexionsgrade von Strahlung (vor allem sichtbares Licht und nahes Infrarot) unterschiedlicher Objekte bzw. Materialien bzw. Beschaffenheit identifiziert werden können. Eine solche Anwendungsmöglichkeit des Verfahrens besteht im automatischen Erkennen von Unkräutern in Feldfruchtkulturen. Dies erlaubt es beispielsweise automationsgesteuert maschinelle Unkrautbekämpfungsmaßnahmen einzuleiten. Es ist auch denkbar charakteristische Eigenschaften von Böden, wie die Bodenbeschaffenheit, die Bodenfeuchte, die Mineralienzusammensetzung oder die Düngermenge grob zu bestimmen.

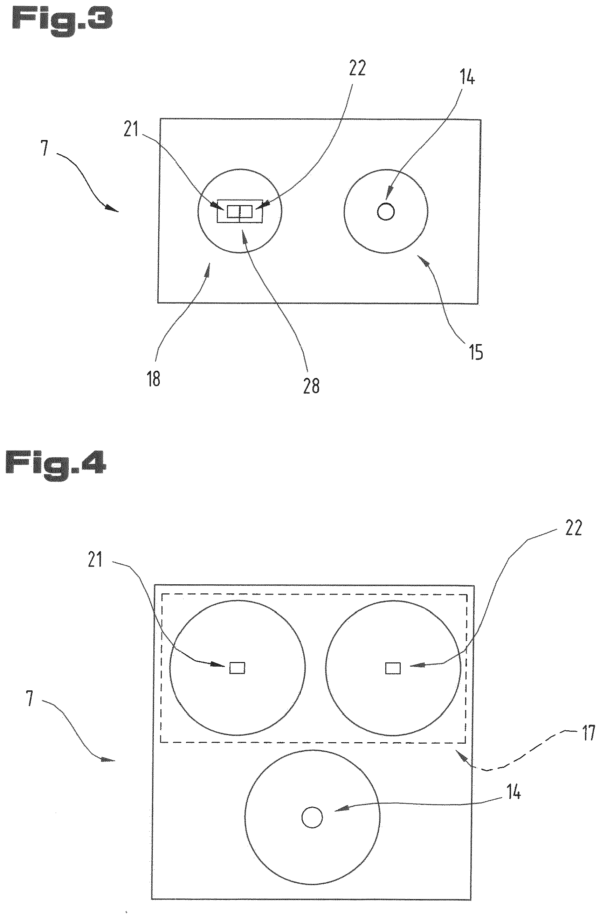

Die Fig. 3 zeigt eine Draufsicht auf die Unterseite der Sensoreinheit 7 gemäß Fig. 1. Die Darstellung entspricht einer Blickrichtung parallel zur optischen Achse 9 des Empfängerstrahlengangs bzw. zur optischen Achse 20 des Senderstrahlengangs. Wie bereits vorstehend ausgeführt, sind die beiden Sender, der Sender 21 und der Sender 22, örtlich eng benachbart in dem Senderstrahlengang angeordnet und bilden so die Strahlungsquelle 17. Gemäß einer bevorzugten Ausführungsvariante sind der erste Sender 21 und der zweite Sender 22 als Leuchtdioden und auf einem gemeinsamen integrierten Schaltkreis 28 (IC) ausgebildet. Die Sensoreinheit 7 gemäß dieser Ausführungsvariante weist somit einen gemeinsamen Senderstrahlengang bzw. einen gemeinsamen "Kanal" für die beiden Sender 21 und 22 auf.

Die Fig. 4 zeigt eine alternative Ausführungsvariante der Sensoreinheit 7, wiederum in Draufsicht auf die Unterseite. Bei dieser Variante sind der erste Sender 21 und der zweite Sender 22 der Strahlungsquelle 17 in zwei separaten Senderstrahlengängen angeordnet. Die Strahlenquelle 17 weist somit zwei Senderstrahlengänge bzw. zwei Kanäle auf.

Die Fig. 5 zeigt ein alternatives Ausführungsbeispiel der Sensoreinheit 7 in Draufsicht von unten auf die Sensoreinheit mit einem Empfängerstrahlengang und mit einem Senderstrahlengang mit drei Sendern. Dabei sind auf dem IC 28 neben dem ersten Sender 21 und zweiten Sender 22 noch ein dritter Sender 29 angeordnet. Der dritte Sender 29 ist dabei zur Emission von Licht zu einer dritten Wellenlänge λ3 ausgebildet. Bei dem vorstehend beschriebenen Verfahren zur Erkennung eines Objekts durch Auswertung der reflektierten Strahlungsintensität bzw. der Reflexionsgrade bei verschiedenen Wellenlängen stehen in diesem Fall neben der Paarung (λ1, A2) außerdem auch noch die weiteren Kombinationen (A1, λ3) und (A2, A3) zur Auswertung in der Auswerteeinheit 25 zur Verfügung. Auf diese Weise kann die Zuverlässigkeit des Erkennens eines Objektes noch deutlich erhöht werden.

In einer weiteren alternativen Ausführungsvariante (nicht dargestellt) der Sensoreinheit 7 sind sowohl der erste Sender 21, der zweite Sender 22 als auch der Detektor 14 in nur einem einzigen Strahlengang bzw. in nur einem einzigen Kanal gemeinsam angeordnet.

Die Fig. 6 zeigt eine alternative Ausführungsform der Vorrichtung zum Erkennen unterschiedlicher Objekte mit der Sensoreinheit 7, geschnitten dargestellt. In dem Senderstrahlengang (entsprechend der optischen Achse 20) ist die Strahlungsquelle 17 im Fokus einer sogenannten Total Internal Reflection-Linse 30 angeordnet (TIR-Linse). Licht der Strahlungsquelle 17 tritt durch eine Eintrittsfläche 31 in den Glaskörper der TIR-Linse 30 und wird an einer Mantelfläche 32 durch innere Totalreflexion weiter abgelenkt, sodass es die TIR-Linse 30 durch die Austrittsfläche 32 in Richtung auf den Messfleck wieder verlässt. Die Oberflächenformen der Eintrittsfläche 31 einerseits und der Mantelfläche 32 andererseits sind dabei so gestaltet bzw. aufeinander abgestimmt, dass insgesamt eine sehr gute Kollimationswirkung erreicht werden kann.

Die Fig. 7 zeigt eine alternative Ausführungsform der Vorrichtung zum Erkennen unterschiedlicher Objekte, dargestellt durch ein Blockschaltbild mit der Steuervorrichtung 24 und den an dem Sensorbalken 2 angeordneten Sensoreinheiten 7. Gemäß diesem Ausführungsbeispiel sind jedem der einzelnen Sensoreinheit 7 eine Auswerteeinheit 25 lokal und baulich integriert zugeordnet und so zu einem Sensormodul 34 zusammengefasst. Zur Steuerung der gesamten Vorrichtung sind alle diese Sensormodule 34 des Sensorbalkens 2 als auch die zentrale Steuervorrichtung 24 an ein Bus-System 35 angeschlossen und derart zum Datenaustausch miteinander verbunden. Das Bus-System 35 wird vorzugsweise durch ein sogenanntes CAN-Bus-System gebildet (Controller Area Network-Bus). Durch die lokale Anordnung jeweils einer Auswerteeinheit 25 bei einer jeden der Sensoreinheiten 7 bilden die Sensormodule 34 jeweils eine autonome Einheit, die nur im Falle des Erkennens bzw. Identifizierens eines Objekts eine entsprechende Nachricht über das Bus-System 35 an die zentrale Steuervorrichtung 24 senden muss. So bleibt schließlich der Steuervorrichtung 24 die Letzt-Entscheidung zur Einleitung einer Änderung des Betriebszustands des Arbeitsgerätes bzw. des Traktors vorbehalten. Es könnte beispielsweise in der Steuervorrichtung 24 vorgesehen sein, dass nur dann eine Beeinflussung des Betriebszustandes des Arbeitsgeräts eingeleitet wird, wenn zumindest von zwei einander benachbarten Sensormodulen das Vorhandensein eines Objekts bzw. das Vorhandenseins eines gleichartigen Objekts signalisiert wird.

Die Fig. 8 enthält eine gemeinsame Darstellung des spektralen Verlaufs des Reflexionsgrads unterschiedlicher Objekte gemeinsam mit dem Spektrum des Sonnenlichts im Bereich der Erdoberfläche. Die Zahlenwerte an der X-Achse geben die Wellenlänge in Nanometer an. Zu beachten ist außerdem, dass die Werte in Richtung der Y-Achse keine absoluten Werte wiedergeben, sondern dass alle Spektralverläufe gemeinsam skaliert sind (bei 1200 nm). Der spektrale Intensitätsverlauf des Sonnenlichts im Bereich des Erdbodens ist durch die fein strichlierte Linie 36 dargestellt. Zu erkennen ist sie auch am typischen Verlauf der Strahlung eines schwarzen Körpers mit einem Maximum im kurzwelligen Bereich und einem allmählichen Abfall hin zu großen Wellenlängen. Die Strahlungsintensität der Sonne 36 zeigt außerdem die typischen Absorptionslinien von in der Atmosphäre vorhandenen Gasen bzw. von Wasserdampf. Der Spektralverlauf des Reflexionsgrads von Erde ist durch die einfach strichlierte Linie 37 dargestellt. Jener von Stein hat einen Verlauf entsprechend der strichpunktierten Linie 38. Der spektrale Verlauf des Reflexionsgrads von Gras ist an der doppelpunktierten Linie 39 zu erkennen (Strich-Punkt-Punkt). Stellvertretend für ein Tier zeigt die durchgezogene Linie 40 den spektralen Reflexionsgrad eines Rehkitzes. Der Verlauf von Linie 41 schließlich entspricht dem Absorptionsvermögen von Wasser bzw. Wasserdampf.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus der beschriebenen Vorrichtung Elemente teilweise unmaßstäblich und/oder vergrößert und/oder verkleinert dargestellt wurden.

**Bezugszeichenliste**

| | | | |
|---|---|---|---|
| 2 | Sensorbalken | 39 | Gras |
| 7 | Sensoreinheit | 40 | Rehkitz |
| 9 | optische Achse | 41 | Wasser(-dampf) |
| 14 | Detektor | | |
| 15 | Linse | | |
| 16 | Spiegel | | |
| 17 | Strahlungsquelle | | |
| 18 | Linse | | |
| 19 | Spiegel | | |
| 20 | optische Achse | | |
| 21 | Sender | | |
| 22 | Sender | | |
| 23 | Filtereinrichtung | | |
| 24 | Steuervorrichtung | | |
| 25 | Auswerteeinheit | | |
| 26 | Notprogramm | | |
| 28 | Integrierter Schaltkreis (IC) | | |
| 29 | Sender | | |
| 30 | TIR-Linse | | |
| 31 | Eintrittsfläche | | |
| 32 | Mantelfläche | | |
| 33 | Austrittsfläche | | |
| 34 | Sensormodul | | |
| 35 | Bus-System | | |
| 36 | Sonne | | |
| 37 | Erde | | |
| 38 | Stein | | |

## Patentansprüche

1. Vorrichtung zum Erkennen von Tieren auf einer landwirtschaftlichen Fläche mit zumindest einer Sensoreinheit (7) zur elektromagnetischen Detektion der Tiere, wobei die Sensoreinheit (7) mindestens eine Strahlungsquelle (17) zur Beleuchtung eines Messfleckes und zumindest einen Detektor (14) zur Messung mindestens einer Intensität einer Strahlung aus dem Messfleck umfasst, und wobei die Strahlungsquelle (17) zumindest einen ersten Sender (21) mit einer ersten Wellenlänge λ1 und zumindest einen zweiten Sender (22) mit einer zweiten Wellenlänge λ2 umfasst, und wobei vor dem Detektor (14) zumindest eine Filtereinrichtung (23) angeordnet ist, durch die Strahlung aus einem Spektralbereich um die erste Wellenlänge λ1 und aus einem Spektralbereich um die zweite Wellenlänge λ2 auswählbar ist, und wobei eine Steuervorrichtung (24) ausgebildet ist, durch die die Strahlungsquelle (17) und der Detektor (14) getaktet betreibbar sind, so dass der Messfleck nacheinander mit verschiedenen Wellenlängen (A1, A2) beleuchtbar und die dabei auftretenden Intensitäten messbar sind, wobei eine Auswerteeinheit (25) ausgebildet ist, durch die aus von dem Detektor (14) gemessenen Werten der Intensitäten (J1, J2), die beim Beleuchten des Messflecks mit den zumindest zwei verschiedenen Wellenlängen (A1, A2) auftreten, das Vorhandensein eines Tieres in dem Messfleck feststellbar ist; **dadurch gekennzeichnet, dass** die Werte der Wellenlängen λ1, λ2 der Sender (21, 22) so gewählt sind, dass sie zumindest teilweise in Bereichen der optischen Absorption der Atmosphäre im nahen Infrarotlicht liegen, wobei der erste Sender (21) die erste Wellenlänge λ1 mit einem Wert von von etwa 940 nm oder um 1130 nm aufweist und der zweite Sender (22) die zweite Wellenlänge λ2 mit einem Wert von 1350-1500 nm aufweist.

2. Vorrichtung nach Anspruch 1, **dadurch gekennzeichnet, dass** der zweite Sender (22) die zweite Wellenlänge λ2 mit einem Wert von etwa 1450 nm aufweist.

3. Vorrichtung nach Anspruch 1 oder 2, **dadurch gekennzeichnet, dass** der Detektor (14) eine Fotodiode umfasst und/oder der erste Sender (21) und der zweite Sender (22) jeweils eine Leuchtdiode (LED) umfassen.

4. Vorrichtung nach einem der vorhergehenden Ansprüche, **dadurch gekennzeichnet, dass** ein Senderstrahlengang für die Strahlungsquelle (17) ausgebildet ist, wobei der erste Sender (21) und der zweite Sender (22) gemeinsam in dem Senderstrahlengang angeordnet sind.

5. Vorrichtung nach einem der vorhergehenden Ansprüche, **dadurch gekennzeichnet, dass** der Senderstrahlengang eine Fokussieroptik, insbesondere einen Parabolspiegel (19) und/oder eine Linse (18) umfasst.

6. Vorrichtung nach einem der vorhergehenden Ansprüche, **dadurch gekennzeichnet, dass** der Senderstrahlengang eine Total Internal Reflection-Linse (TIR-Linse) aufweist.

7. Vorrichtung nach einem der vorhergehenden Ansprüche, **dadurch gekennzeichnet, dass** die Filtereinrichtung (23) einen Doppelbandpassfilter umfasst, wobei der Doppelbandpassfilter für die erste Wellenlänge λ1 und für die zweite Wellenlänge λ2 durchlässig ist.

8. Vorrichtung nach einem der vorhergehenden Ansprüche, **dadurch gekennzeichnet, dass** ein Empfängerstrahlengang für den Detektor (14) ausgebildet ist, wobei der Empfängerstrahlengang eine Fokussieroptik, insbesondere einen Parabolspiegel (16) und/oder eine Linse (15) umfasst.

9. Vorrichtung nach einem der vorhergehenden Ansprüche, **dadurch gekennzeichnet, dass** ein Sensorbalken (2) ausgebildet ist, wobei mehrere Sensoreinheiten (7) an dem Sensorbalken (2), über eine Längserstreckung des Sensorbalkens (2) verteilt, angeordnet sind.

10. Vorrichtung nach einem der vorhergehenden Ansprüche, **dadurch gekennzeichnet, dass** optische Achsen (9) der Empfängerstrahlengänge und optische Achsen (20) der Senderstrahlengänge zumindest annähernd parallel relativ zueinander ausgerichtet sind, wobei die Senderstrahlengänge und die Empfängerstrahlengänge vorzugsweise für einen Bodenabstand mit einer Höhe von ca. 1 m ausgelegt sind.

11. Verfahren zum optischen Erkennen von Tieren bei der Bearbeitung einer landwirtschaftlichen Fläche mit einem Arbeitsgerät mit einer Vorrichtung mit einer Sensoreinheit (7) zur elektromagnetischen Detektion der Tiere, wobei die Sensoreinheit (7) eine Strahlungsquelle (17) zur Beleuchtung eines Messfleckes und einen Detektor (14) zur Messung einer Intensität einer Strahlung aus dem Messfleck umfasst, **dadurch gekennzeichnet, dass**
(a) der Messfleck mit zumindest einem ersten Sender (21) der Strahlungsquelle (17) mit Strahlung einer ersten Wellenlänge A1 mit einem Wert von etwa 940 nm oder um 1130 nm bestrahlt wird und dabei mit dem Detektor (14) eine erste Intensität J1 einer von dem Messfleck reflektierten Strahlung gemessen wird und
(b) der Messfleck mit zumindest einem zweiten Sender (22) der Strahlungsquelle (17) mit Strahlung einer zweiten Wellenlänge λ2 mit einem Wert von 1350-1500 nm bestrahlt wird und dabei mit dem Detektor (14) eine zweite Intensität J2 einer von dem Messfleck reflektierten Strahlung gemessen wird, und,
(c) während die Strahlungsquelle (17) ausgeschaltet ist, mit dem Detektor (14) eine Intensität J0 einer von dem Messfleck reflektierten Umgebungsstrahlung gemessen wird
(d) und zumindest zwei unverfälschte Intensitäten J1n, J2n berechnet werden, indem zumindest von der ersten Intensität J1 und von der zweiten Intensität J2 jeweils die Intensität J0 der von dem Messfleck reflektierten Umgebungsstrahlung subtrahiert wird
(e) und das Vorhandensein eines Tiers festgestellt wird, wenn die Werte der zumindest zwei unverfälschten Intensitäten J1n, J2n in einem bestimmten Toleranzfeld liegen.

12. Verfahren nach Anspruch 11, **dadurch gekennzeichnet, dass** der Schritt (e) für die Werte unverfälschter Intensitäten J1n, J2n nur dann durchgeführt wird, wenn der Wert von J1n größer ist als der Wert einer ersten Signifikanzgrenze und wenn der Wert von J2n größer ist als der Wert einer zweiten Signifikanzgrenze.

13. Verfahren nach einem der Ansprüche 11 bis 12, **dadurch gekennzeichnet, dass** die Abfolge der Messungen gemäß den Schritten (a), (b), und (c) periodisch fortlaufend mit einer Frequenz von zumindest 10 Hz, vorzugsweise zumindest 100 Hz, durchgeführt wird.

14. Verfahren nach einem der Ansprüche 11 bis 13, **dadurch gekennzeichnet, dass** in einem zumindest die Schritte (a), (b), und (c) umfassenden Messdurchlauf zusätzlich eine Kontrollmessung mit der Bestimmung eines Wertes einer Intensität JK durchgeführt wird, wobei der Messfleck gleichzeitig mit dem ersten Sender (21) und mit dem zweiten Sender (22) bestrahlt wird.

15. Verfahren nach einem der Ansprüche 11 bis 14, **dadurch gekennzeichnet, dass** bei Signalisierung des Vorhandenseins eines Tieres in dem Messfleck durch eine Steuervorrichtung (24) eine Änderung des Betriebszustandes des Arbeitsgerätes veranlasst wird, insbesondere ein Notprogramm (26) mit einem Anheben des Arbeitsgeräts während des Passierens eines Bereichs, in dem das Tier vorhanden ist, vorgesehen ist.

16. Verfahren nach einem der Ansprüche 11 bis 15, **dadurch gekennzeichnet, dass** zum Vergleichen mit dem Toleranzfeld des vermuteten Tiers Mittelwerte von mehreren Wertepaaren J1n, J2n verwendet werden, wobei diese aus zeitlich aufeinanderfolgenden Messdurchgängen berechnet werden, wobei zum Vergleichen mit dem Toleranzfeld Mittelwerte von Wertepaaren J1n, J2n, die einer zusammenhängenden, die gesamte Bearbeitungsbreite des Arbeitsgeräts abdeckenden Teilfläche einer mit dem Arbeitsgerät zu bearbeitenden Bearbeitungsbahn angehören, verwendet werden.

## Claims

1. Device for detecting animals on an agricultural area, with at least one sensor unit (7) for the electromagnetic detection of the animals, wherein the sensor unit (7) comprises at least one radiation source (17) for illuminating a measuring spot and at least one detector (14) for measuring at least one intensity of radiation from the measuring spot, and wherein the radiation source (17) comprises at least one first transmitter (21) with a first wavelength λ1 and at least one second transmitter (22) with a second wavelength λ2, and wherein in front of the detector (14) at least a filter device (23) is arranged, through which radiation can be selected from a spectral range around the first wavelength λ1 and from a spectral range around the second wavelength λ2, and wherein a control device (24) is formed, by means of which the radiation source (17) and the detector (14) are operable in a clocked manner so that the measuring spot an be illuminated in succession with different wavelengths (λ1, λ2) and the intensities that occur can be measured, wherein an evaluation unit (25) is formed, by means of which the presence of an animal in the measuring spot can be determined from the values of the intensities (J1, J2) that are measured by the detector (14) and that occur when the measurement spot is illuminated with the at least two different wavelengths (λ1, λ2);
**characterized in that**
the values of the wavelengths λ1, λ2 of the transmitters (21, 22) are selected such that they are at least partially in the ranges of optical absorption of the atmosphere in the near infrared light, wherein the first transmitter (21) has the first wavelength λ1 with a value of approximately 940 nm or about 1130 nm, and the second transmitter (22) has the second wavelength λ2 with a value of 1350-1500 nm.

2. Device according to claim 1, **characterized in that** the second transmitter (22) has the second wavelength λ2 of approximately 1450 nm.

3. Device according to claim 1 or 2, **characterized in that** the detector (14) comprises a photodiode and/or the first transmitter (21) and the second transmitter (22) each comprise a light-emitting diode (LED).

4. Device according to one of the preceding claims, **characterized in that** a transmitter beam path is formed for the radiation source (17), wherein the first transmitter (21) and the second transmitter (22) are arranged together in the transmitter beam path.

5. Device according to one of the preceding claims, **characterized in that** the transmitter beam path comprises focusing optics, in particular a parabolic mirror (19) and/or a lens (18).

6. Device according to one of the preceding claims, **characterized in that** the transmitter beam path has a total internal reflection lens (TIR lens).

7. Device according to one of the preceding claims, **characterized in that** the filter device (23) comprises a double-bandpass filter, wherein the double-bandpass filter is transparent for the first wavelength λ1 and for the second wavelength λ2.

8. Device according to one of the preceding claims, **characterized in that** a receiver beam path is formed for the detector (14), wherein the receiver beam path comprises focusing optics, in particular a parabolic mirror (16) and/or a lens (15).

9. Device according to one of the preceding claims, **characterized in that** a sensor bar (2) is formed, wherein multiple sensor units (7) are arranged on the sensor bar (2), distributed over a longitudinal extension of the sensor bar (2).

10. Device according to one of the preceding claims, **characterized in that** optical axes (9) of the receiver beam paths and optical axes (20) of the transmitter beam paths are aligned at least approximately parallel relative to one another, wherein the transmitter beam paths and the receiver beam paths preferably are configured for a distance from the ground with a height of approx. 1 m.

11. Method for the optical detection of animals when processing an agricultural area with a working device with a device with a sensor unit (7) for the electromagnetic detection of the animals, wherein the sensor unit (7) comprises a radiation source (17) for illuminating a measuring spot and comprises a detector (14) for measuring an intensity of radiation from the measurement spot, **characterized in that**
(a) the measuring spot is irradiated with at least one first transmitter (21) of the radiation source (17) with radiation of a first wavelength λ1 with a value of approximately 940 nm or about 1130 nm and a first intensity J1 of a radiation reflected by the measuring spot is measured with the detector (14), and
(b) the measuring spot is irradiated with at least one second transmitter (22) of the radiation source (17) with radiation of a second wavelength λ2 with a value of 1350 - 15000 nm and a second intensity J2 of a radiation reflected by the measuring spot is measured with the detector (14) and
(c) while the radiation source (17) is switched off, an intensity J0 of an ambient radiation reflected by the measuring spot is measured with the detector (14),
(d) and at least two undistorted intensities J1n, J2n are calculated by subtracting the respective intensity J0 of the ambient radiation reflected from the measurement spot from at least the first intensity J1 and the second intensity J2
(e) and the presence of an animal is determined if the values of the at least two undistorted intensities J1n, J2n are within a specific tolerance range.

12. Method according to claim 11, **characterized in that** step (e) is performed for the values of undistorted intensities J1n, J2n only if the value of J1n is greater than the value of a first significance limit and if the value of J2n is greater than the value of a second significance limit.

13. Method according to one of claims 11 to 12, **characterized in that** the sequence of measurements according to steps (a), (b) and (c) is carried out periodically and continuously at a frequency of at least 10 Hz, preferably at least 100 Hz.

14. Method according to one of claims 11 to 13, **characterized in that** in a measurement process comprising at least steps (a), (b) and (c), a control measurement is also carried out with the determination of a value of an intensity JK, wherein the measurement spot is irradiated with the first transmitter (21) and with the second transmitter (22).

15. Method according to one of claims 11 to 14, **characterized in that** when the presence of an animal in the measuring spot is signaled by a control device (24), a change of the operating state of the working device is initiated, in particular an emergency program (26) with the working device being raised during the passing through an area in which the animal is present is provided.

16. Method according to any one of claims 11 to 15, **characterized in that** for comparison with the tolerance zone of the suspected animal, mean values of a plurality of pairs of values J1n, J2n are used, these being calculated from successive measurement processes, wherein for comparison with the tolerance zone, mean values of pairs of values J1n, J2n are used, which belong to a cohesive partial area of a machining path to be machined with the working device that covers the entire working width of the working device.

## Revendications

1. Dispositif de détection d'animaux sur une surface agricole avec au moins un groupe capteur (7) de détection électromagnétique des animaux, dans lequel le groupe capteur (7) comprend au moins une source de rayonnement (17) pour éclairer une tache de mesure et au moins un détecteur (14) pour mesurer au moins une intensité d'un rayonnement provenant de la tache de mesure, et dans lequel la source de rayonnement (17) comprend au moins un premier émetteur (21) avec une première longueur d'onde λ1 et au moins un deuxième émetteur (22) avec une deuxième longueur d'onde λ2, et dans lequel est disposé avant le détecteur (14) au moins un système de filtrage (23), par lequel le rayonnement peut être choisi parmi une plage spectrale de la première longueur d'onde λ1 et parmi une plage spectrale de la deuxième longueur d'onde λ2, et dans lequel est réalisé un dispositif de commande (24), par lequel la source de rayonnement (17) et le détecteur (14) peuvent fonctionner de manière cadencée de sorte que la tache de mesure peut être éclairée successivement avec différentes longueurs d'onde (λ1, λ2) et les intensités en résultant peuvent être mesurées, dans lequel un groupe d'évaluation (25) est réalisé, par lequel la présence d'un animal dans la tache de mesure peut être constatée à partir de valeurs, mesurées par le détecteur (14), des intensités (J1, J2), qui résultent lors de l'éclairage de la tache de mesure avec les au moins deux longueurs d'onde (λ1, λ2) différentes ; **caractérisé en ce que** les valeurs des longueurs d'onde λ1, λ2 des émetteurs (21, 22) sont choisies de telle sorte qu'elles se situent au moins en partie dans des plages de l'absorption optique de l'atmosphère dans la lumière infrarouge proche, dans lequel le premier émetteur (21) présente la première longueur d'onde λ1 avec une valeur d'environ 940 nm ou de 1130 nm et le deuxième émetteur (22) présente la deuxième longueur d'onde λ2 avec une valeur de 1350-1500 nm.

2. Dispositif selon la revendication 1, **caractérisé en ce que** le deuxième émetteur (22) présente la deuxième longueur d'onde λ2 avec une valeur d'environ 1450 nm.

3. Dispositif selon la revendication 1 ou 2, **caractérisé en ce que** le détecteur (14) comprend une photodiode et/ou le premier émetteur (21) et le deuxième émetteur (22) comprennent respectivement une diode électroluminescente (DEL).

4. Dispositif selon l'une quelconque des revendications précédentes, **caractérisé en ce qu'**un chemin optique d'émetteur est réalisé pour la source de rayonnement (17), dans lequel le premier émetteur (21) et le deuxième émetteur (22) sont disposés conjointement sur le chemin optique d'émetteur.

5. Dispositif selon l'une quelconque des revendications précédentes, **caractérisé en ce que** le chemin optique d'émetteur comprend une optique de focalisation, en particulier un miroir parabolique (19) et/ou une lentille (18).

6. Dispositif selon l'une quelconque des revendications précédentes, **caractérisé en ce que** le chemin optique d'émetteur présente une lentille RTl (à réflexion totale interne).

7. Dispositif selon l'une quelconque des revendications précédentes, **caractérisé en ce que** le système de filtrage (23) comprend un double filtre passe-bande, dans lequel le double filtre passe-bande laisse passer la première longueur d'onde λ1 et la deuxième longueur d'onde λ2.

8. Dispositif selon l'une quelconque des revendications précédentes, **caractérisé en ce qu'**un chemin optique de récepteur est réalisé pour le détecteur (14), dans lequel le chemin optique de récepteur comprend une optique de focalisation, en particulier un miroir parabolique (16) et/ou une lentille (15).

9. Dispositif selon l'une quelconque des revendications précédentes, **caractérisé en ce qu'**un bloc capteur (2) est réalisé, dans lequel plusieurs groupes capteurs (7) sont disposés sur le bloc capteur (2) de manière répartie sur une extension longitudinale du bloc capteur (2).

10. Dispositif selon l'une quelconque des revendications précédentes, **caractérisé en ce que** des axes optiques (9) des chemins optiques de récepteur et des axes optiques (20) des chemins optiques d'émetteur sont orientés au moins approximativement de manière parallèle les uns par rapport aux autres, dans lequel les chemins optiques d'émetteur et les chemins optiques de récepteur sont conçus de préférence pour un espacement par rapport au sol à une hauteur d'environ 1 m.

11. Procédé d'identification optique d'animaux lors du travail d'une surface agricole avec un engin de travail avec un dispositif avec un groupe capteur (7) de détection électromagnétique des animaux, dans lequel le groupe capteur (7) comprend une source de rayonnement (17) pour éclairer une tache de mesure et un détecteur (14) pour mesurer une intensité d'un rayonnement provenant de la tache de mesure, **caractérisé en ce que**
(a) la tache de mesure est exposée à un rayonnement d'une première longueur d'onde λ1 avec une valeur d'approximativement 940 mm ou de 1130 nm par au moins un premier émetteur (21) de la source de rayonnement (17) et ce faisant une première intensité J1 d'un rayonnement réfléchi par la tache de mesure est mesurée avec le détecteur (14),
(b) la tache de mesure est exposée à un rayonnement d'une deuxième longueur d'onde λ2 avec une valeur de 1350-1500 nm avec au moins un deuxième émetteur (22) de la source de rayonnement (17) et ce faisant une deuxième intensité J2 d'un rayonnement réfléchi par la tache de mesure est mesurée avec le détecteur (14), et
(c) alors que la source de rayonnement (17) est désactivée, une intensité J0 d'un rayonnement environnant réfléchi par la tache de mesure est mesurée avec le détecteur (14),
(d) et au moins deux intensités authentiques J1n, J2n sont calculées **en ce que** respectivement l'intensité J0 du rayonnement environnant réfléchi par la tache de mesure est soustraite au moins de la première intensité J1 et de la deuxième intensité J2,
(e) et la présence d'un animal est constatée quand les valeurs des au moins deux intensités authentiques J1n, J2n se situent dans une plage de tolérance définie.

12. Procédé selon la revendication 11, **caractérisé en ce que** l'étape (e) est effectuée pour les valeurs d'intensités authentiques J1n, J2n seulement lorsque la valeur de J1n est supérieure à la valeur du premier seuil significatif et lorsque la valeur de J2n est supérieure à la valeur d'un deuxième seuil significatif.

13. Procédé selon l'une quelconque des revendications 11 à 12, **caractérisé en ce que** la succession des mesures selon les étapes (a), (b) et (c) est effectuée de manière périodique en continu avec une fréquence d'au moins 10 Hz, de préférence d'au moins 100 Hz.

14. Procédé selon l'une quelconque des revendications 11 à 13, **caractérisé en ce que** lors d'une session de mesure comprenant au moins les étapes (a), (b) et (c), une mesure de contrôle avec la définition d'une valeur d'une intensité JK est effectuée, dans lequel la tache de mesure est exposée à un rayonnement simultanément avec le premier émetteur (21) et le deuxième émetteur (22).

15. Procédé selon l'une quelconque des revendications 11 à 14, **caractérisé en ce que** lorsque la présence d'un animal dans la tache de mesure est signalée, une modification de l'état de fonctionnement de l'engin de travail est déclenchée par un dispositif de commande (24), en particulier un programme d'urgence (26) avec un relevage de l'engin de travail lors du passage d'une zone, dans laquelle l'animal est présent, est prévu.

16. Procédé selon l'une quelconque des revendications 11 à 15, **caractérisé en ce que** des valeurs moyennes de plusieurs paires de valeurs J1n, J2n sont utilisées pour la comparaison avec une plage de tolérance de l'animal supposé, dans lequel celles-ci sont calculées à partir de cycles de mesure se suivant dans le temps, dans lequel des valeurs moyennes de paires de valeurs J1n, J2n, qui relèvent d'une surface partielle contiguë, recouvrant la totalité de la largeur de travail de l'engin de travail d'une bande de travail à travailler avec l'engin de travail, sont utilisées pour la comparaison à la plage de tolérance.
